Europäisches Patentamt

(19) European Patent Office

Office européen des brevets

(11) Numéro de publication : **0 344 035 B1**

(12) **FASCICULE DE BREVET EUROPEEN**

(45) Date de publication du fascicule du brevet :
27.03.91 Bulletin 91/13

(51) Int. Cl.⁵ : **H04L 12/28**

(21) Numéro de dépôt : 89401302.8

(22) Date de dépôt : **10.05.89**

(54) **Réseau de transmission d'informations numériques entre plusieurs stations.**

(30) Priorité : 24.05.88 FR 8806882

(43) Date de publication de la demande :
29.11.89 Bulletin 89/48

(45) Mention de la délivrance du brevet :
27.03.91 Bulletin 91/13

(84) Etats contractants désignés :
DE ES GB IT

(56) Documents cités :
MINI-MICRO CONFERENCE RECORD, mai
1984, pages 1-10, Northeast, New York, US;
R.L. MITCHELL: "Super serial systems"

(56) Documents cités :
ELECTRONICS & COMMUNICATIONS IN
JAPAN, partie I: Communications, vol. 70, no.
2, février 1987, pages 57-65, Scripta Technica,
Inc., Silver spring, Maryland, US; G. KIRUMA:
"Analysis of the CSMA/CD protocol with deterministic contention resolution"
E.D.N. ELECTRICAL DESIGN NEWS, vol. 29,
no. 4, 23 février 1984, pages 297-
298,300,302-304,306,307, Boston, Massachusetts, US; M. WEBB: "Build a VLSI-based
workstation for the Ethernet environment"

(73) Titulaire : APRIL S.A.
5, Rue du Petit Robinson B.P. 12
F-78350 Jouy-en-Josas (FR)

(72) Inventeur : Rivoal, Paul
36, avenue Emilie de Villeneuve
F-81100 Castres (FR)
Inventeur : Saumade, Marc
La Gayé Fréjeville
F-81090 Castres (FR)

(74) Mandataire : Plaçais, Jean-Yves et al
Cabinet Netter, 40, rue Vignon
F-75009 Paris (FR)

Jouve, 18, rue Saint-Denis, 75001 PARIS

## Description

L'invention concerne la transmission automatique d'informations numériques entre différentes stations qui sont interconnectées par un réseau de transmission.

Dans le domaine des systèmes automatiques et informatiques, on connaît déjà des réseaux de transmission d'informations numériques entre une interface parallèle et plusieurs stations raccordées chacune à l'interface parallèle par un milieu de transmission dit bus parallèle.

L'interface parallèle ainsi que les stations sont munies d'un protocole de communication, régissant l'émission/réception sur ledit milieu.

Le protocole bus-parallèle n'est pas satisfaisant dans le domaine des automates programmables industriels car il exige un codage complexe des informations numériques dont la fiabilité est amoindrie par la distance séparant l'interface parallèle des stations et par les conditions industrielles (arcs électriques, chocs,...) environnant lesdites stations.

La présente invention a pour but d'apporter une solution à ce problème.

L'invention offre un procédé de transmission d'informations numériques entre plusieurs stations, à travers un milieu de transmission passant par les stations, dont chacune possède une interface avec ledit milieu, interface munie d'un protocole de communication, régissant l'émission/réception sur ledit milieu. Un tel procédé est divulgué par le document MINI-MICRO CONFERENCE RECORD, MAI 1984, Northeast, New York, US ; R. C. MITCHELL : "Super serial systems".

Selon une définition générale de l'invention, les interfaces sont munies d'un protocole du type dit CSMA/CD (Carrier Sense Multiple Access/Collision Detection), c'est-à-dire "accès multiple avec écoute préalable et détection de collision", selon lequel chaque interface est capable d'émission/réception sur ledit milieu en mode asynchrone, tout en écoutant en permanence ledit milieu, l'interface ne pouvant commencer à émettre des informations qu'en l'absence de signal sur le milieu, et s'astreignant à interrompre son émission s'il apparaît une collision, manifestant un début d'émission simultanée par plusieurs interfaces,

– au moins l'une des stations joue le rôle de maître, les autres étant esclaves,
– en mode courant, les interfaces stations esclaves n'ont le droit d'émettre qu'en réponse à une requête individuelle en provenance de la station maître, ce qui élimine tout risque de collision,
– certaines au moins des stations esclaves dites affranchies, ont cependant le droit d'émettre à leur initiative, d'une manière exceptionnelle, et
– en cas de collision, sur une telle émission exceptionnelle, cette collision est résolue par ledit protocole CSMA/CD.

Ainsi, le protocole de communication de type CSMA/CD, implanté sur des stations dont l'une au moins est maître et les autres esclaves, facilite la transmission, sur un milieu de transmission de type série, d'informations numériques exemptes de codage complexe.

En pratique l'interface de la station maître est soumise à une interdiction d'émettre pendant la résolution d'une collision.

Selon un mode de réalisation préféré de l'invention, le protocole CSMA/CD est choisi "déterministe" c'est-à-dire capable de résoudre toute collision en un temps prédéterminé.

L'invention offre en outre un dispositif de transmission d'informations numeriques entre plusieurs stations pour mettre en oeuvre le procédé susmentionné caractérisé en ce que chaque interface comprend :

– un contrôleur de communication possédant une ligne d'émission d'informations, une ligne de réception d'informations reliées l'une et l'autre au milieu de transmission, et une unité de traitement des lignes véhiculant les informations d'émission/réception, ledit contrôleur de communication étant propre à valider l'émission/réception d'informations sur ledit milieu, ainsi qu'à régir l'autorisation d'émission,
– un dispositif électronique muni d'une mémoire vive à double accès, formant mémoire-tampon pour des informations d'émission/réception, et
– une unité de traitement propre à régir l'échange d'informations entre la station et cette mémoire-tampon.
– des moyens propres à contenir le protocole CSMA/CD ainsi qu'une donnée personnalisant la station en esclave ou maître.

Avantageusement, ladite unité de traitement est incorporée au contrôleur de communication.

Selon une variante de l'invention, ladite unité de traitement est une unité de traitement supplémentaire logée entre la mémoire-tampon et la station.

Selon un aspect de l'invention, le contrôleur de communication d'une interface esclave écoute en permanence le milieu de transmission dans l'attente d'une requête de la station maître le concernant,

– en présence d'une telle requête, le contrôleur de communication la décode, la stocke dans la mémoire-tampon, puis va chercher une réponse déjà préparée et stockée dans ladite mémoire-tampon, et enfin avertit la station qui de son côté traite la requête ainsi décodée et prépare une nouvelle réponse pour une requête suivante, ladite réponse préparée étant ensuite stockée dans la mémoire-tampon. La durée de l'échange (requête-réponse) se réduit ainsi à un simple transfert d'informations réalisé via le contrôleur de communication.

Selon un autre aspect de l'invention, les contrôleurs de communication des stations esclaves affranchies émettent, d'une manière exceptionnelle, à leur initiative, à l'intention d'une station, maître ou esclave, des informations pré-définies et délivrées par les contrôleurs de communication desdites stations esclaves affranchies en fonction d'évènements pré-définis intervenant sur lesdites stations esclaves affranchies.

Selon un autre mode de réalisation préféré de l'invention, les contrôleurs de communication des stations esclaves affranchies comportent un état de fonctionnement normal dans lequel les stations esclaves affranchies se comportent comme de simples stations esclaves, et un état de fonctionnement spécial dans lequel les stations esclaves affranchies sont autorisées à émettre à leur initiative vers une station, maître ou esclave, lesdits contrôleurs de communication des stations esclaves affranchies passant de l'état normal à l'état spécial lorsqu'ils sont sollicités par les évènements pré-définis intervenant sur leur station esclave affranchie, et retournant à leur état de fonctionnement normal en fin d'émission exceptionnelle.

L'invention a également pour objet un réseau destiné au transfert d'informations entre un poste central d'un automate et une pluralité de postes périphériques associés notamment à des capteurs et/ou actionneurs dudit automate.

Selon un mode de réalisation préféré de la variante de l'invention, le poste central est la station maître du réseau tandis que les postes périphériques sont les stations esclaves dudit réseau.

Selon un autre aspect de la variante de l'invention, l'une au moins des stations esclaves affranchies peut solliciter à son initiative, la station maître en vue d'obtenir le transfert de la faculté d'effectuer des requêtes à l'intention des stations esclaves, ce qui permet à ladite station esclave affranchie de jouer le rôle de sous-maître.

Avantageusement, les informations numériques d'émission/réception comprennent chacune d'une part une donnée relative à leur structure ainsi qu'à leur format et d'autre part des données relatives à leur signification, lesdites informations étant transmises via le milieu de transmission d'une station à une autre station sous la forme de flux d'informations parallèles véhiculant chacun des informations de structure et de format particuliers.

De préférence, les flux d'informations parallèles comprennent des flux dits "débanalisés" qui véhiculent des informations dont la structure et le format sont pré-définis et figés et des flux dits "banalisés" qui véhiculent des informations dont la structure et le format sont ouverts et libres.

Selon un autre mode de réalisation préféré de l'invention, l'unité de traitement de la station maître active les flux d'informations banalisées et débanalisées soit d'une façon aléatoire, lorsque le passage d'informations significatives supplémentaires s'avère nécessaire, soit d'une façon cyclique, à chaque cycle automate.

L'unité de traitement de chaque station participe ainsi à l'optimisation de la transmission des informations sur le milieu en entretenant cycliquement le dialogue entre chaque station et en transférant aléatoirement des données exceptionnelles.

Selon un autre aspect de l'invention, les flux d'informations transmis d'une station à une autre station via le milieu de transmission sont gérés par l'unité de traitement de chaque station qui traite à chaque cycle automate, par priorité décroissante, d'abord le flux qui véhicule les informations débanalisées relatives aux cartes de circuits actionneurs de chaque station, puis le flux qui véhicule les informations banalisées relatives aux cartes de circuits actionneurs de chaque station, ensuite le flux qui véhicule les informations débanalisées relatives aux cartes de circuits capteurs de chaque station, ensuite le flux qui véhicule les informations banalisées relatives aux cartes de circuits capteurs de chaque station, et enfin le flux qui véhicule d'autres informations banalisées relatives à l'ensemble des cartes de circuits de chaque station, ladite unité de traitement de chaque station délivrant, en réponse auxdits flux qu'elle gère, des informations déjà préparées et stockées.

Avantageusement, l'unité de traitement lignes de chaque station esclave stocke dans la mémoire-tampon la requête de la station maître la concernant, puis la traite soit selon un mode transparent dans lequel l'unité de traitement lignes n'avertit pas l'unité de traitement de la station esclave, le traitement de la requête s'effectuant ultérieurement, soit selon un mode urgent dans lequel l'unité de traitement lignes avertit immédiatement l'unité de traitement de la station esclave, le traitement de la requête et l'élaboration de la nouvelle réponse pour la requête suivante s'effectuant immédiatement.

De préférence, les informations sont susceptibles d'être stockées dans la mémoire-tampon soit seulement lorsque les cases mémoires qui leur sont attribuées sont vides, soit de façon permanente, écrasant ainsi éventuellement les informations stockées précédemment.

D'autres caractéristiques et avantages de l'invention apparaîtront à l'examen de la description détaillée ci-après, et des dessins annexés, sur lesquels :

– la figure 1 illustre le schéma général d'un réseau de communication selon l'invention ;

– la figure 2 représente schématiquement les éléments essentiels et constitutifs d'une station selon l'invention ;

– la figure 3 est le schéma d'une variante de réalisation d'une station selon l'invention ;

– la figure 4 est un exemple d'algorithme illustrant le fonctionnement de l'unité de traitement lignes d'une station esclave selon l'invention ;

– la figure 5 est un exemple d'algorithme illustrant le fonctionnement d'une station esclave affranchie dans son mode spécial selon l'invention ;

– la figure 6 est un exemple d'algorithme illustrant le fonctionnement d'une station maître ; et

– la figure 7 est un schéma illustrant les flux d'informations parallèles selon l'invention.

Les dessins annexés comportent de nombreux éléments de caractère certain qu'ils peuvent seuls apporter. Ils font donc partie intégrante de la description, pour servir à faire comprendre l'invention, aussi bien qu'à la définir.

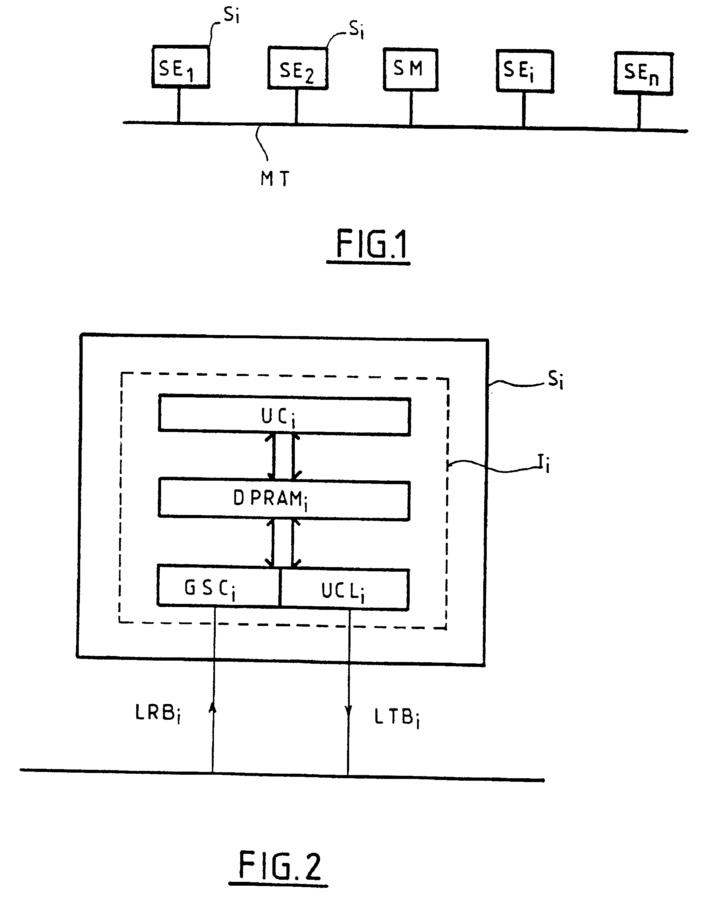

La figure 1 illustre une pluralité de stations $S_i$ dont au moins l'une d'entre elles joue le rôle de maître, notée SM, et dont les autres sont esclaves, notées $SE_1$,...., $SE_i$,..., $SE_n$. Les stations $S_i$ sont raccordées les unes aux autres par un support ou milieu de transmission MT. A chacune des stations $S_i$, sont connectés un ou plusieurs équipements automatisés, tels que des capteurs et actionneurs, des contrôleurs/régulateurs, des terminaux informatiques, des ordinateurs.

Dans un mode de réalisation préféré de l'invention dans lequel le réseau est destiné au transfert d'informations entre un poste central d'un automate programmable et une pluralité de postes périphériques associés à des capteurs et/ou actionneurs, le poste central est la station maître du réseau SM tandis que les postes périphériques sont les stations esclaves dudit réseau $SE_i$.

La figure 2 illustre, à titre d'exemple, une réalisation d'une station $S_i$ (on omet l'indice $i$ par la suite). Cette station se compose principalement d'une interface I comprenant un contrôleur de communication GSC possédant une ligne d'émission LTB, une ligne de réception d'informations LRB reliées l'une et l'autre au milieu de transmission MT, et une unité de traitement UCL des lignes LRB et LTB véhiculant les informations d'émission/réception. L'interface I comprend également un dispositif électronique DPRAM muni d'une mémoire vive à double accès, formant mémoire-tampon pour des informations d'émission/réception. Enfin, l'interface I comprend une unité de traitement UC régissant l'échange d'informations entre la station S et cette mémoire-tampon DPRAM.

Le circuit GSC peut être réalisé, à l'aide de boîtiers de circuits intégrés tels que le modèle 80C152 de la société des Etats-Unis INTEL CORPORATION. Ce circuit doit fournir au moins deux signaux logiques et leurs compléments.

Le dispositif électronique DPRAM peut être le dispositif permettant l'échange de données numériques entre deux microprocesseurs de capacité de traitement de données différentes décrit dans la Demande de Brevet n° 88 02557 déposée le 1er mars 1988 par les Demandeurs.

Les explications concernant le fonctionnement de la mémoire-tampon DPRAM peuvent être obtenues dans la Demande de Brevet n° 88 02557. A toutes fins utiles, le contenu descriptif de la demande antérieure est à considérer comme incorporé à la présente description.

L'unité de traitement UC peut être réalisée à l'aide d'un microprocesseur tel que le modèle 68000 de la société des Etats-Unis MOTOROLA.

Les cartes de circuits capteurs et/ou actionneurs (non représentées) de la station sont reliées à l'unité de traitement UC par un bus interne (non représenté).

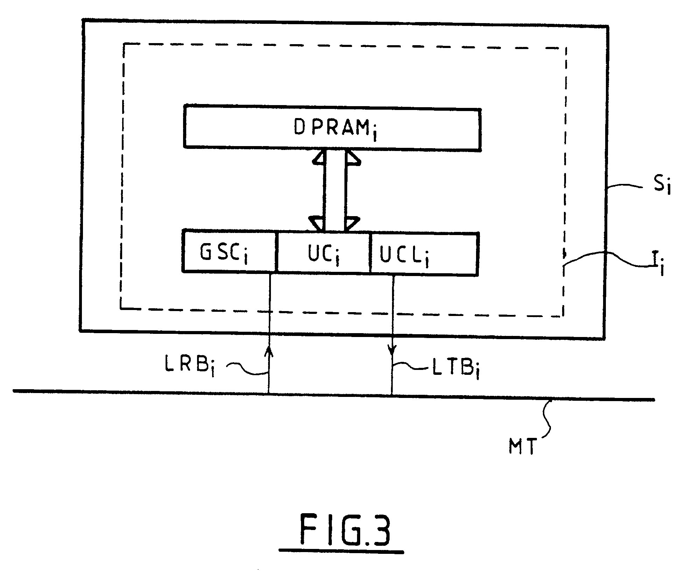

Sur la figure 3, on a représenté une variante d'une réalisation d'une station S dans laquelle l'unité de traitement UC est incorporée au contrôleur de communication GSC.

Selon une caractéristique très importante de l'invention, les interfaces sont munies d'un protocole du type CSMA/CD, selon lequel chaque interface I est capable d'émission/réception sur le milieu de transmission MT en mode asynchrone, tout en écoutant en permanence ledit milieu MT. L'interface I ne peut commencer à émettre des informations qu'en l'absence de signal sur le milieu MT, et s'astreint à interrompre son émission s'il apparaît une collision, manifestant un début d'émission simultanée par plusieurs interfaces I. Le protocole de communication CSMA/CD est implanté sur les stations dont l'une au moins joue le rôle de maître et dont les autres sont esclaves. Selon cette implantation, les interfaces des stations esclaves n'ont le droit d'émettre qu'en réponse à une requête individuelle en provenance de la station maître, ce qui élimine tout risque de collision.

L'implantation est par exemple de type programmation, c'est-à-dire que l'utilisateur du réseau introduit, dans des mémoires mortes programmables (PROM) de chaque interface, un message personnalisant la station concernée, à savoir station esclave ou station maître.

Cette caractéristique est tout particulièrement avantageuse dans le contexte d'un automate programmable car elle permet d'optimiser et de fiabiliser la transmission d'informations courantes via le milieu de transmission entre le poste central et les postes périphériques munis de cartes capteurs/actionneurs.

Toutefois, l'organisation hiérarchique maître/esclave ne permet pas aux stations esclaves d'émettre une information en toute urgence vers la station maître, sans attendre la prochaine scrutation de ladite station maître.

Or, les stations esclaves de nombreux systèmes automatiques et informatiques requièrent la faculté d'émettre à leur initiative, d'une manière exceptionnelle, à l'intention de la station maître, lorsque des évènements critiques et urgents interviennent sur leurs cartes de circuits.

Selon une autre caractéristique importante de l'invention, l'organisation hiérarchique maître/esclave est rompue, de manière que certaines au moins des stations esclaves, dites affranchies, ont cependant le droit d'émettre à leur initiative, d'une manière exceptionnelle. Par exemple, la configuration d'une station esclave en une station esclave affranchie est effectuée selon le désir de l'utilisateur à la mise en service du réseau. Cette configuration est stockée dans une mémoire vive.

Néanmoins, plusieurs stations esclaves affranchies ainsi que la station maître peuvent au même moment émettre leurs informations. Il y a donc collision.

Une autre caractéristique de l'invention est d'apporter une solution à ce problème, ainsi en cas de collision, sur une telle émission exceptionnelle, cette collision est résolue par ledit protocole CSMA/CD.

Par ailleurs l'interface de la station maître est soumise à une interdiction d'émettre pendant la résolution d'une collision.

Dans une variante de l'invention, l'une au moins des stations esclaves affranchies peut solliciter à son initiative la station maître en vue d'obtenir le transfert de la faculté d'effectuer des requêtes à l'intention des stations esclaves, ce qui permet à ladite station esclave affranchie de jouer le rôle de sous-maître.

Le protocole CSMA/CD est choisi "déterministe", c'est-à-dire capable de résoudre toute collision en un temps prédéterminé.

En d'autres termes, pour la résolution de collision, les stations sont rangées par priorité décroissante d'émission et possèdent chacune un créneau temporel durant lequel elles sont seules autorisées à émettre.

Ce protocole CSMA/CD déterministe est également implanté dans les mémoires mortes programmables de chaque interface.

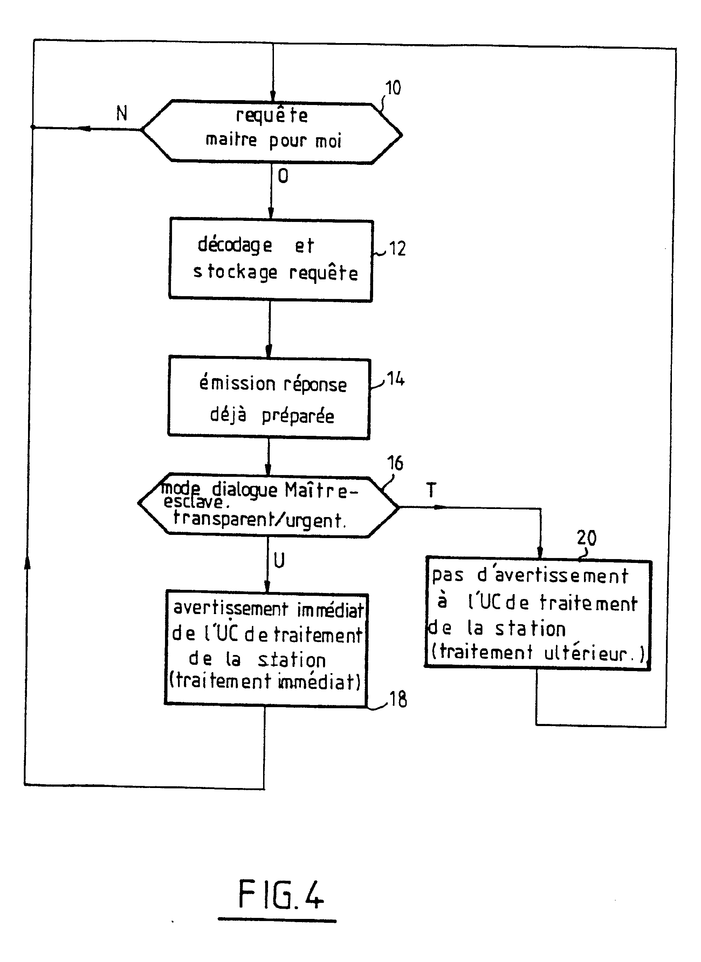

La figure 4 est un algorithme illustrant le fonctionnement d'une station esclave.

Le contrôleur de communication d'une interface esclave écoute en permanence le milieu de transmission MT dans l'attente d'une requête de la station maître le concernant (étape 10).

En présence d'une telle requête (étape 12), le contrôleur de communication décode la requête, puis la stocke dans la mémoire-tampon DPRAM.

Le contrôleur de communication GSC va chercher une réponse en vue de l'émettre via le milieu de transmission MT (étape 14). La réponse est déjà préparée et stockée dans la mémoire-tampon DPRAM.

Le traitement de la requête s'effectue soit selon un mode transparent, soit selon un mode urgent (étape 16).

Dans le cas d'un mode de dialogue maître/esclave urgent, l'unité de traitement UCL avertit immédiatement l'unité de traitement UC de la station qui de son côté traite la requête ainsi décodée et prépare une nouvelle réponse pour une requête suivante. Ladite réponse préparée est ensuite stockée dans la mémoire-tampon DPRAM.

Dans le cas d'un mode de dialogue maître/esclave transparent, l'unité de traitement lignes UCL n'avertit pas l'unité de traitement UC de la station. Le traitement de la requête s'effectuera ultérieurement (étape 20).

D'une façon plus détaillée, la requête en provenance du maître comprend une trame contenant notamment un octet de flux que l'on décrira ci-après ainsi que des octets d'adresse. En fonction de cet octet de flux, le contrôleur de communication GSC sait retrouver la réponse déjà préparée dans la mémoire-tampon DPRAM.

En d'autres termes, le contrôleur de communication anticipe la requête puisque la réponse est déjà prête avant que la requête n'arrive.

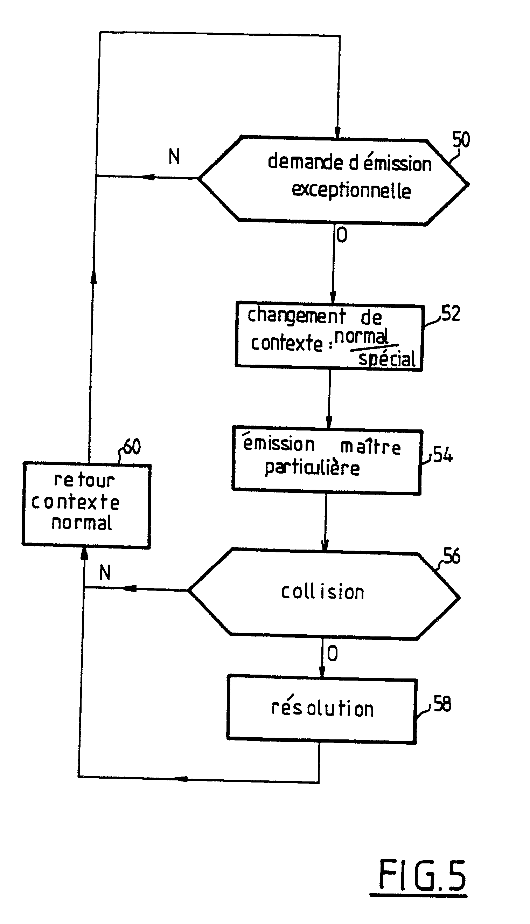

La figure 5 est un algorithme qui illustre le fonctionnement d'une station esclave affranchie dans son mode spécial.

Les contrôleurs de communication des stations esclaves affranchies émettent, d'une manière exceptionnelle, à leur initiative, à l'intention d'une station, maître ou esclave, des informations pré-définies et délivrées par lesdits contrôleurs de communication en fonction d'évènements pré-définis intervenant sur les cartes de circuits des stations esclaves affranchies.

Les évènements intervenant sur les stations esclaves affranchies viennent par exemple du processus à automatiser par l'automate. Ces évènements peuvent par exemple changer l'état d'une variable d'une carte de circuit capteur et/ou actionneur. Ce changement d'état provoque l'élaboration d'une trame particulière contenant des paramètres et des adresses relatifs à l'évènement. D'une façon plus précise, le fonctionnement des stations esclaves affranchies est le suivant.

A l'apparition d'un évènement pré-défini sur une station esclave affranchie, une trame particulière est émise à l'intention d'une station maître ou esclave. En présence d'une telle émission exceptionnelle (étape 50) le contrôleur de communication GSC de la station esclave affranchie change de contexte de fonctionnement, passant ainsi d'un état de fonctionnement normal dans lequel la station esclave affranchie n'est pas autorisée à émettre vers la station maître, à un état de fonctionnement spécial dans lequel ladite station esclave affranchie est autorisée à émettre à leur initiative vers une station, maître ou esclave (étape 52).

Ainsi sollicitée par un évènement pré-défini intervenant sur la station esclave affranchie, l'interface de la station esclave affranchie émet une trame particulière d'une façon exceptionnelle vers une station, maître ou esclave (étape 54).

Plusieurs stations esclaves affranchies ainsi que la station maître peuvent au même moment émettre des informations. Il y a donc collision (étape 56).

En cas de collision, sur de telles émissions exceptionnelles, cette collision est résolue par le protocole CSMA/CD, décrit ci-avant (étape 58).

En fin d'émission exceptionnelle, les contrôleurs de communication des stations esclaves affranchies retournent à leur mode de fonctionnement normal (étape 60).

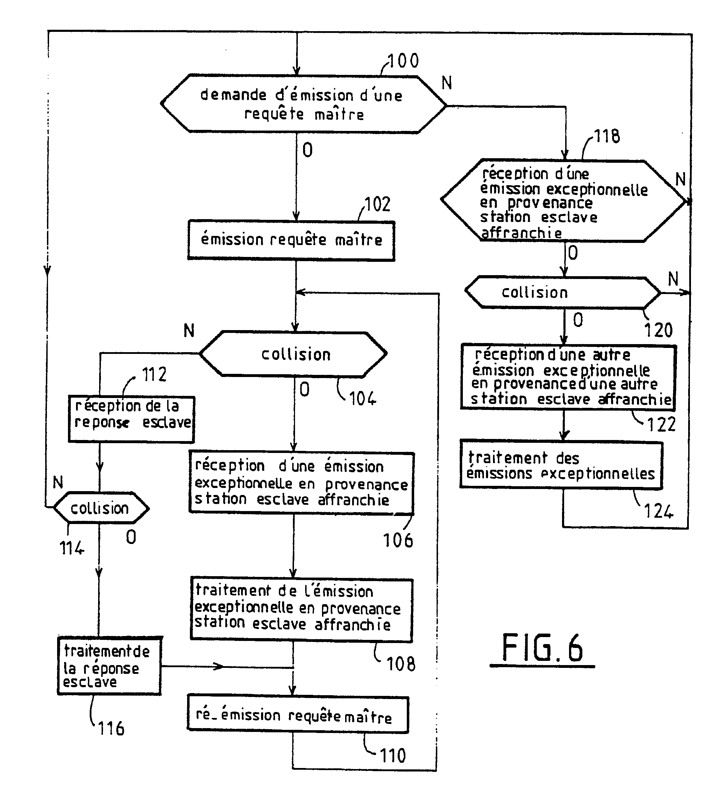

La figure 6 est un algorithme qui illustre le fonctionnement d'une station maître.

En cas de demande d'émission d'une station maître provenant de l'unité de traitement UC de ladite station maître (étape 100), une requête individuelle est émise à l'intention d'une station esclave (étape 102).

En cas de collision avec une émission exceptionnelle en provenance d'une station esclave affranchie (étape 104), la station maître est soumise à une interdiction d'émettre pendant la résolution de la collision.

L'unité de traitement lignes de la station maître reçoit la trame particulière contenue dans l'émission exceptionnelle en provenance de la station esclave affranchie (étape 106).

L'unité de traitement lignes de la station maître traite l'émission exceptionnelle (étape 108).

Après traitement de l'émission exceptionnelle en provenance de la station esclave affranchie, la requête de la station maître est réémise à l'intention de la station esclave concernée (étape 110). En cas d'une nouvelle collision avec une émission exceptionnelle, la résolution de la collision s'effectue comme expliqué ci-avant.

En cas de réception d'une réponse d'une station esclave à une requête maître (étape 112), il peut y avoir collision (étape 114) avec l'émission de la requête maître (étape 102). La collision est résolue par le traitement de la réponse en provenance de la station esclave (étape 116) puis par la ré-émission de la requête maître (étape 110).

En cas d'absence de demande d'émission d'une requête maître (étape 100), la station maître peut recevoir en provenance d'une station esclave affranchie une émission exceptionnelle (étape 118). Une collision (étape 120) peut se produire avec la réception d'une autre émission exceptionnelle en provenance d'une autre station esclave affranchie (étape 122). Cette collision est résolue par le traitement des émissions exceptionnelles en provenance des stations esclaves affranchies (étape 124).

Les informations numériques d'émission/réception comprennent chacune d'une part une donnée relative à leur structure ainsi qu'à leur format et d'autre part des données relatives à leur signification.

Selon une caractéristique de l'invention, lesdites informations sont regroupées en blocs constitués chacun d'informations de même structure et de même format, ce qui permet auxdites informations d'être transmises via le milieu de transmission MT d'une station à une autre station sous la forme de flux d'informations parallèles véhiculant chacun des informations de structure et de format particuliers.

Les flux d'informations parallèles comprennent des flux dits "débanalisés" qui véhiculent les informations dont la structure et le format sont pré-définis et figés. Ces informations débanalisées n'exigent pas d'octets de protocole indiquant la longueur des informations et la manière de les traiter. Il existe également des flux dits "banalisés" qui véhiculent des informations dont la structure et le format sont ouverts et libres. Ces informations banalisées exigent des octets de protocole indiquant la longueur des informations et la manière de les traiter.

C'est l'unité de traitement UC de chaque interface I qui reconnaît ces flux d'informations banalisés et débanalisés selon leur octet de flux. L'unité de traitement de la station maître active les flux d'informations soit d'une façon aléatoire lorsque le passage d'informations supplémentaires s'avère nécessaire, soit d'une façon cyclique, à chaque cycle automate.

Un dialogue de type aléatoire est commandé par la station maître soit à son initiative, soit à l'initiative d'une demande particulière contenue dans une information de type cyclique délivrée par une station esclave.

Par ailleurs, certaines au moins des informations banalisées sont susceptibles d'être stockées dans la mémoire-tampon de chaque interface seulement lorsque les cases mémoires qui leur sont attribuées sont vides (via un sémaphore qui indique l'état des cases), tandis que certaines au moins des informations débanalisées sont susceptibles d'être stockées dans la mémoire-tampon de façon permanente, écrasant ainsi éventuellement les informations stockées précédemment.

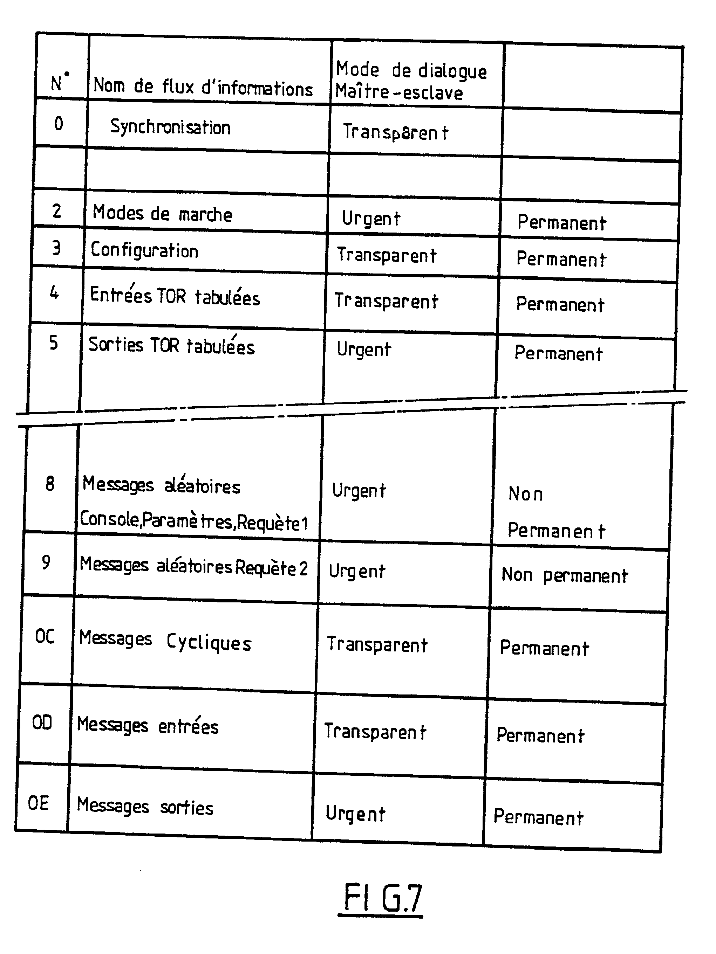

On se réfère maintenant à la figure 7 qui illustre sous la forme d'un tableau les flux d'informations qui sont identifiés par un octet de flux.

Les principaux flux d'informations sont les suivants.

Le flux "synchronisation" noté n°00, véhicule des informations relatives à l'état du milieu de transmission (actif, inactif). Le flux synchronisation est un flux de type débanalisé à traitement cyclique c'est-à-dire que les informations véhiculées par ledit flux synchronisation sont traitées par l'unité de traitement UC de la station concernée. Le mode de dialogue maître/esclave est de type transparent. Une information de ce flux n'exige pas de réponse de la part de la station qui la reçoit.

Le flux "modes de marche", noté n°02 permet de véhiculer des informations indiquant aux stations esclaves l'état de marche de la station maître. Il s'agit d'informations de type débanalisé à traitement cyclique. Les informations véhiculées par le flux mode de marche permettent également d'écrire le mode de marche (marche/arrêt) de la station concernée. La réception d'une information de ce flux est acquittée par anticipation. Le mode de dialogue maître/esclave est de type urgent. Les informations véhiculées par ce flux d'informations mode de marche sont susceptibles d'être stockées de façon permanente dans la mémoire-tampon associée à la station concernée.

Le flux "configuration", noté n°03, véhicule des informations de type débanalisé à traitement aléatoire. Il s'agit d'informations relatives à la configuration des stations (emplacement, signature, statut). La réception de telles informations est acquittée par anticipation. Le mode de dialogue maître/esclave est de type transparent. Les informations sont susceptibles d'être stockées d'une façon permanente dans la mémoire-tampon de la station concernée.

Le flux "entrées TOR tabulées", noté n°04, véhicule les informations relatives à l'état des circuits capteurs des stations concernées. Il s'agit d'informations de type débanalisé à accès cyclique. Le mode de dialogue maître/esclave est de type transparent. Les informations sont stockées dans la mémoire-tampon des stations concernées de façon permanente. La réponse aux informations véhiculées par le flux n°04 est acquittée par anticipation.

Le flux "sorties TOR tabulées", noté n°05, permet le transfert des informations relatives à l'état des circuits actionneurs des stations concernées. Il s'agit d'informations de type débanalisé à accès cyclique. Le mode de dialogue maître/esclave est de type urgent. Les informations véhiculées par le flux n°05 sont stockées dans la DPRAM de façon permanente. La réponse à de telles informations est acquittée par anticipation.

Par l'intermédiaire des flux n°04 et n°05 d'informations de type débanalisé, la station maître de l'automate rapatrie les valeurs lues d'états entrée et/ou sortie des cartes de circuits capteurs et/ou actionneurs des stations exclues. De la même manière, elle peut écrire des nouvelles valeurs d'états entrée/sortie sur d'autres cartes circuits capteurs/actionneurs.

Le flux "messages aléatoires, requête 1", noté n°08, véhicule les informations de type banalisé, c'est-à-dire des messages structurés. Il s'agit d'informations de type banalisé à traitement aléatoire. Par exemple les informations véhiculées par le flux n°08 concernent les informations relatives à la console de l'utilisateur, et aux paramètres des stations du réseau. Le mode de dialogue maître/esclave est de type urgent. Les informations véhiculées par le flux n°8 sont stockées seulement lorsque les cases mémoires qui leur sont attribuées sont vides. La réception de telles informations est acquittée par anticipation.

Le flux "messages cycliques, requête 2", noté n°09 véhicule des informations de type banalisé à traitement aléatoire, c'est-à-dire des informations de type message structuré. Le flux n°09 ne transporte pas des informations de la console utilisateur ou les informations de type paramètre. Le mode de dialogue maître/esclave est du type urgent. Les informations véhiculées par le flux n°09 sont stockées dans la mémoire DPRAM seulement lorsque les cases mémoires qui leur sont attribuées sont vides. La réponse à de telles informations est acquittée par anticipation.

Le flux "messages cycliques", noté n°0C, véhicule les informations des stations n'utilisant pas les flux n°04, 05, 0D ou 0E. Il s'agit d'informations de type banalisé à accès cyclique. Le mode de dialogue maître/esclave est de type transparent. Les informations véhiculées par le flux 0C sont stockées dans la DPRAM de façon non permanente. La réception de telles informations est acquittée par anticipation.

Le flux "messages entrées", noté n°0D, véhicule les informations de type banalisé relatives aux circuits capteurs des stations concernées. Il s'agit d'informations de type banalisé à accès cyclique. Le mode de dialogue maître/esclave est de type urgent. Les informations véhiculées par le flux d'informations 0D sont stockées dans la DPRAM de façon permanente. La réception de telles informations est acquittée par anticipation.

Le flux "messages sorties", noté n°0E, véhicule les informations relatives aux circuits actionneurs des stations concernées. Il s'agit d'informations de type banalisé à accès cyclique. Le mode de dialogue maître/esclave est de type urgent. Les informations véhiculées par le module 0E sont stockées dans la DPRAM de façon permanente. La réception de telles informations est acquittée par anticipation.

Les informations transmises par les flux décrits ci-avant sont gérées par l'unité de traitement de l'interface de chaque station. Cette unité de traitement traite à chaque cycle automate, par priorité décroissante, d'abord le flux n°5, puis le flux 0E, puis le flux 04, ensuite le flux 0D et enfin le flux 0C. Ainsi à chaque cycle automate, les requêtes de la station maître sont validées en respectant l'ordre des flux suivants : 05, 0E, 04, 0D, et 0C. Les échanges aléatoires de type 08 et 09 lorsqu'ils existent sont validés entre les flux 0D et 0C. Donc, dans un cycle automate, une station a la possibilité d'entretenir 7 échanges-requêtes/réponses, c'est-à-dire de communiquer sur 7 niveaux de dialogues en parallèle (5 cycliques et éventuellement 2 aléatoires).

La déclaration des flux est à l'initiative des stations qui à l'initialisation de l'automate, s'inscrivent dans autant de flux qu'elles veulent, suivant leurs besoins.

## Revendications

1. Procédé de transmission d'informations numériques entre plusieurs stations, à travers un milieu de transmission (MT) passant par les stations (S$_i$), dont chacune possède une interface (I$_i$) avec ledit milieu (MT), interface munie d'un protocole de communication, régissant l'émission/réception sur ledit milieu (MT), caractérisé, en combinaison,

– par le fait que lesdites interfaces ($I_i$) sont munies d'un protocole du type dit CSMA/CD, selon lequel chaque interface ($I_i$) est capable d'émission/réception sur ledit milieu (MT) de façon asynchrone, tout en écoutant en permanence ledit milieu (MT), l'interface ($I_i$) ne pouvant commencer à émettre des informations qu'en l'absence de signal sur le milieu (MT), et s'astreignant à interrompre son émission s'il apparaît une collision, manifestant un début d'émission simultanée par plusieurs interfaces ($I_i$),

– par le fait qu'au moins l'une des stations joue le rôle de maître (SM), les autres étant esclaves ($SE_i$),

– par le fait qu'en mode courant, les interfaces des stations esclaves n'ont le droit d'émettre qu'en réponse à une requête individuelle en provenance de la station maître (SM), ce qui élimine tout risque de collision,

– par le fait que certaines au moins des stations esclaves, dites affranchies, ont cependant le droit d'émettre à leur initiative, d'une manière exceptionnelle,

– par le fait qu'en cas de collision, sur une telle émission exceptionnelle, cette collision est résolue par ledit protocole CSMA/CD.

2. Procédé selon la revendication 1, caractérisé en ce que l'interface de la station maître est soumise à une interdiction d'émettre pendant la résolution d'une collision.

3. Procédé selon les revendications 1 et 2, caractérisé en ce que le protocole CSMA/CD est choisi "déterministe", c'est-à-dire capable de résoudre toute collision en un temps prédéterminé.

4. Dispositif de transmission d'informations numériques entre plusieurs stations pour mettre en oeuvre le procédé selon l'une quelconque de précédentes revendications, caractérisé en ce que chaque interface ($I_i$) comprend :

– un contrôleur de communication ($GSC_i$) possédant une ligne d'émission d'informations ($LTB_i$), une ligne de réception d'informations ($LRB_i$) reliées l'une et l'autre au milieu de transmission (MT), et une unité de traitement desdites lignes ($UCL_i$) véhiculant les informations d'émission/réception, ledit contrôleur de communication étant propre à valider l'émission/réception d'informations sur ledit milieu (MT), ainsi qu'à régir l'autorisation d'émission,

– un dispositif électronique ($DPRAM_i$) muni d'une mémoire vive à double accès, formant mémoire-tampon pour des informations d'émission/réception, [et]

– une unité de traitement ($UC_i$) propre à régir l'échange d'informations entre la station ($S_i$) et cette mémoire-tampon ($DPRAM_i$), et

– des moyens propres à contenir le protocole CSMA/CD ainsi qu'une donnée personnalisant la station en esclave ou maître.

5. Dispositif selon la revendication 4, caractérisé en ce que ladite unité de traitement ($UC_i$) est incorporée au contrôleur de communication ($GSC_i$).

6. Dispositif selon la revendication 4, caractérisé en ce que ladite unité de traitement ($UC_i$) est une unité de traitement supplémentaire logée entre la mémoire-tampon ($DPRAM_i$) et la station ($S_i$).

7. Dispositif selon l'une quelconque des revendications 4 à 6, caractérisé en combinaison,

– par le fait que le contrôleur de communication ($GSC_i$) d'une interface esclave comprend des moyens pour écouter en permanence le milieu de transmission (MT) dans l'attente d'une requête de la station maître (SM) le concernant,

– par le fait qu'en présence d'une telle requête, le contrôleur de communication comprend des moyens pour la décoder, pour la stocker dans la mémoire-tampon ($DPRAM_i$), et pour aller chercher une réponse déjà préparée et stockée dans ladite mémoire-tampon ($DPRAM_i$), et enfin des moyens pour avertir la station ($S_i$) qui de son côté comprend des moyens pour traiter la requête ainsi décodée et des moyens pour préparer une nouvelle réponse pour une requête suivante, ladite réponse préparée étant ensuite stockée dans la mémoire-tampon ($DPRAM_i$).

8. Dispositif selon l'une des revendications 4 à 7, caractérisé en ce que les contrôleurs de communications ($GSC_i$) des station esclaves affranchies comprennent des moyens pour émettre, d'une manière exceptionnelle, à leur initiative, à l'intention d'une station, maître (SM) ou esclave (SE), des informations pré-définies et délivrées par les contrôleurs de communication ($GSC_i$) desdites stations esclaves affranchies en fonction d'évènements pré-définis intervenant sur lesdites stations esclaves affranchies.

9. Dispositif selon la revendication 8, caractérisé en ce que les contrôleurs de communication des stations esclaves affranchies comportent un état de fonctionnement normal dans lequel les stations esclaves affranchies se comportent comme de simples stations esclaves, et un état de fonctionnement spécial dans lequel les stations esclaves affranchies sont autorisées à émettre à leur initiative vers une station, maître ou esclave, lesdits contrôleurs de communication des stations esclaves affranchies passant de l'état normal à l'état spécial lorsqu'ils sont sollicités par les évènements pré-définis intervenant sur leur station esclave affranchie et retournant à leur état de fonctionnement normal en fin d'émission exceptionnelle.

10. Dispositif destiné au transfert d'informations entre un poste central d'un automate programmable et une pluralité de postes périphériques associés notamment à des capteurs et/ou actionneurs dudit automate selon l'une quelconque des revendications 4 à 9, caractérisé en ce que le poste central est la station maître (SM) du réseau tandis que les postes périphériques sont les stations enclaves (SE$_i$) dudit réseau.

11. Dispositif selon la revendication 10, caractérisé en ce que l'une au moins des stations esclaves affranchies comprend des moyens pour solliciter à son initiative la station maître en vue d'obtenir le transfert de la faculté d'effectuer des requêtes à l'intention des stations esclaves, ce qui permet à ladite station esclave affranchie de jouer le rôle de sous-maître.

12. Dispositif selon l'une quelconque des revendications 4 à 11, caractérisé en ce que les informations numériques d'émission/réception comprennent chacune d'une part une donnée relative à leur structure ainsi qu'à leur format et d'autre part des données relatives à leur signification, lesdites informations étant transmises via le milieu de transmission d'une station à une autre station sous la forme de flux d'informations parallèles véhiculant chacun des informations de structure et de format particuliers.

13. Dispositif selon la revendication 12, caractérisé en ce que les flux d'informations parallèles comprennent des flux dits "débanalisés" qui véhiculent des informations dont la structure et le format sont pré-définis et figés et les flux dits "banalisés" qui véhiculent des informations dont la structure et le format sont ouverts et libres.

14. Dispositif selon la revendication 13, caractérisé en ce que l'unité de traitement (UC$_i$) de la station maître (SM) comprend des moyens pour activer les flux d'informations banalisés et débanalisés soit d'une façon aléatoire lorsque le passage d'informations significatives supplémentaires s'avère nécessaire, soit d'une façon cyclique, à chaque cycle automate.

15. Dispositif selon la revendication 14, caractérisé en ce que les flux d'informations transmis d'une station à une autre via le milieu de transmission (MT) sont gérés par l'unité de traitement (UC$_i$) de chaque station (S$_i$) qui comprend des moyens pour traiter à chaque cycle automate, par priorité décroissante, d'abord le flux qui véhicule les informations débanalisées relatives aux cartes de circuits actionneurs de chaque station, puis le flux qui véhicule les informations banalisées relatives aux cartes de circuits actionneurs de chaque station, ensuite le flux qui véhicule les informations débanalisées relatives aux cartes de circuits capteurs de chaque station, ensuite le flux qui véhicule les informations banalisées relatives aux cartes de circuits capteurs de chaque station, et enfin le flux qui véhicule d'autres informations banalisées relatives à l'ensemble des cartes de circuits de chaque station, ladite unité de traitement (UC$_i$) de chaque station délivrant en réponse auxdits flux qu'elle gère, des informations déjà préparées, et stockées.

16. Dispositif selon la revendication 7, appliqué aux automates programmables selon les revendications 13 à 15, caractérisé en ce que l'unité de traitement lignes (UCL$_i$) de chaque station esclave (SE$_i$) comprend des moyens pour stocker dans la mémoire-tampon la requête de la station maître la concernant, des moyens pour la traiter [puis la traite] soit selon un mode transparent dans lequel l'unité de traitement lignes (UCL$_i$) n'avertit pas l'unité de traitement (UC$_i$) de la station esclave (SE$_i$), le traitement de la requête s'effectuant ultérieument, soit selon un mode urgent dans lequel l'unité de traitement (UCL$_i$) avertit l'unité de traitement (UC$_i$) de la station esclave (SE$_i$), le traitement de la requête et l'élaboration de la nouvelle réponse pour la requête suivante s'effectuant immédiatement.

17. Dispositif selon la revendication 16, caractérisé en ce que la mémoire-tampon de chaque station comprend des moyens pour stocker les informations soit seulement lorsque les cases mémoires qui leur sont attribuées sont vides, soit de façon permanente, écrasant ainsi éventuellement les informations stockées précédemment.

**Ansprüche**

1. Verfahren zur Übertragung numerischer Informationen zwischen mehreren Stationen über ein Übertragungsmedium (MT), das die Stationen (S$_i$) durchläuft, von denen jede eine Schnittstelle (I$_i$) mit dem Medium MT hat, die mit einem Kommunikationsprotokoll versehen ist, das das Senden/den Empfang auf dem Medium registriert, dadurch gekennzeichnet, daß in Kombination

die Schnittstellen (I$_i$) mit einem Protokoll des Typs CSMA/CD versehen sind, demzufolge jede Schnittstelle (I$_i$) über das Medium (MT) asynchron senden/empfangen kann, wobei die Schnittstelle (I$_i$) erst dann Informationen senden kann, wenn kein Signal auf dem Medium (MT) ist, und sich unterwirft, seinen Sendebetrieb zu unterbrechen, wenn eine Kollision auftritt, die sich durch den Beginn des Sendens mehrerer Schnittstellen (I$_i$) äußert,

– mindestens eine der Stationen die Rolle einer Master-Station (SM) spielt und die anderen die Rolle von Slave-Stationen (SE$_i$) spielen,

– im laufenden Betrieb die Schnittstellen der Slave-Stationen nicht das Recht haben, zu senden, es sei denn als Antwort auf eine individuelle Anfrage, die von der Master-Station (SM) kommt, wodurch jede Gefahr einer Kollision ausgeräumt wird,

– mindestens einige der Slave-Stationen, die als freie Stationen bezeichnet werden, jedoch das Recht haben, ausnahmsweise auf eigene Initiative hin zu senden,

– im Falle einer Kollision bei einem solchen außerordentlichen Sendevorgang diese Kollision durch das Protokoll CSMA/CD gelöst wird.

2. Verfahren nach Anspruch 1, dadurch gekennzeichnet, daß die Schnittstelle der Master-Station einem Verbot unterliegt, während des Lösens eines Kollisionsfalles zu senden.

3. Verfahren nach Anspruch 1 oder 2, dadurch gekennzeichnet, daß das Protokoll CSMA/CD als "deterministisches" Protokoll gewählt wird, d.h. mit der Fähigkeit, jeden Kollisionsfall in einer vorgegebenen Zeit zu lösen.

4. Vorrichtung zur Übertragung von numerischen Informationen zur Durchführung eines Verfahrens nach einem der vorhergehenden Ansprüche, dadurch gekennzeichnet, daß jede Schnittstelle ($I_i$) umfaßt :

– eine Kommunikations-Steuereinheit ($GSC_i$) umfassend eine Sendeleitung ($LTB_i$) zum Senden von Informationen, eine Empfangsleitung ($LRB_i$) zum Empfangen von Informationen, die beide mit dem Übertragungsmedium (MT) verbunden sind, und eine Verarbeitungseinheit ($UCL_i$) für die die Sende-/Empfangsinformationen übertragenden Leitungen, wobei die Kommunikations-Steuereinheit geeignet ist, die Sende-/Empfangsinformationen auf dem Medium (MT) freizugeben sowie die Sendeerlaubnis zu regeln,

– eine elektronische Vorrichtung ($DPRAM_i$) mit einem Zwischenspeicher mit doppeltem Zugriff, der als Pufferspeicher für die Sende-/Empfangsinformationen dient, eine Verarbeitungseinheit ($UC_i$) zum Regeln des Informationsaustausches zwischen der Station (Si) und diesem Zwischenspeicher ($DPRAM_i$) und

– Mittel zur Aufnahme des Protokolls CSMA/CD sowie eines Datenwortes, welches die Station als Slave-oder Masterstation ausweist.

5. Vorrichtung nach Anspruch 4, dadurch gekennzeichnet, daß die Verarbeitungseinheit ($UC_i$) in die Kommunikations-Steuereinheit ($GSC_i$) inkorporiert ist.

6. Vorrichtung nach Anspruch 4, dadurch gekennzeichnet, daß die Verarbeitungseinheit ($UC_i$) eine zusätzliche Verarbeitungseinheit ist, die zwischen dem Zwischenspeicher ($DPRAM_i$) und der Station ($S_i$) gelegen ist.

7. Vorrichtung nach einem der Ansprüche 4 bis 6, dadurch gekennzeichnet, daß in Kombination

– die Kommunikations-Steuereinheit ($GSC_i$) einer Slave-Schnittstelle Mittel umfaßt, um ständig das Übertragungsmedium (MT) abzuhören in Erwartung einer sie betreffenden Anfrage der Master-Station (SM),

– bei Vorhandensein einer solchen Anfrage, die Kommunikations-Steuereinheit Mittel umfaßt, um die Anfrage zu decodieren, sie in dem Pufferspeicher ($DPRAM_i$) zu speichern und um eine bereits vorbereitete und in dem genannten Pufferspeicher ($DPRAM_i$) abgespeicherte Antwort zu suchen, und daß die Steuereinheit ferner Mittel umfaßt, um die Station ($S_i$) zu informieren, die ihrerseits Mittel zur Verarbeitung der so decodierten Anfrage und Mittel zur Vorbereitung einer neuen Antwort auf eine folgende Anfrage umfaßt, wobei die vorbereitete Antwort anschließend in dem Pufferspeicher ($DPRAM_i$) gespeichert wird.

8. Vorrichtung nach einem der Ansprüche 4 bis 7, dadurch gekennzeichnet, daß die Kommunikations-steuereinheiten ($GSC_i$) der freien Slave-Stationen Mittel umfassen, um ausnahmsweise auf eigene Initiative zu Gunsten einer Master-Station (SM) oder Slave-Station (SE) Informationen zu senden, die vorgegeben sind und von den Kommunikations-Steuereinheiten ($GSC_i$) der genannten freien Slave-Stationen in Abhängigkeit von vorgegebenen Ereignissen abgegeben werden, die an den genannten freien Slave-Stationen eintreten.

9. Vorrichtung nach Anspruch 8, dadurch gekennzeichnet, daß die Kommunikations-Steuereinheiten der freien Slave-Stationen einen normalen Betriebszustand umfassen, in dem die freien Slave-Stationen sich wie einfache Slave-Stationen verhalten, sowie einen speziellen Betriebszustand umfassen, in dem die freien Slave-Stationen autorisiert sind, auf ihre eigene Initiative hin an eine Master-Station oder eine Slave-Station zu senden, wobei die Kommunikations-Steuereinheiten der freien Slave-Stationen vom normalen Betriebszustand in den speziellen Betriebszustand übergehen, wenn sie durch die an ihrer freien Slave-Station auftretenden vordefinierten Ereignisse dazu veranlaßt werden, und in ihren normalen Betriebszustand nach Abschluß des außerordentlichen Sendebetriebs zurückkehren.

10. Vorrichtung zur Übertragung von Informationen zwischen einer zentralen Stelle eines programmierbaren Automaten und einer Mehrzahl von angeschlossenen Peripheriestellen, insbesondere von Meßfühlern und/oder Betätigungsgliedern des Automaten nach einem der Ansprüche 4 bis 9, dadurch gekennzeichnet, daß die zentrale Stelle die Master-Station (SM) des Netzwerkes ist, während die Peripheriestellen die Slave-Stationen ($SE_i$) des Netzwerkes sind.

11. Vorrichtung nach Anspruch 10, dadurch gekennzeichnet, daß eine oder mehrere der freien Slave-Stationen Mittel umfassen, um auf ihre eigene Initiative hin Master-Stationen anzusprechen mit dem Ziel, die Möglichkeit zu erhalten, Anfragen zu Gunsten von Slave-Stationen durchzuführen, was es der freien Slave-Station erlaubt, die Rolle eines Submasters zu spielen.

12. Vorrichtung nach einem der Ansprüche 4 bis 11, dadurch gekennzeichnet, daß die numerische Sendeinformation/Empfangsinformation jeweils einerseits ein Datenwort umfaßt, das sich auf ihre Struktur sowie ihr Format bezieht, und andererseits Daten umfaßt, die sich auf ihre Bedeutung beziehen, wobei die Informationen über das Übertragungsmedium von einer Station zur anderen in Form von parallelen Informationsströmen übertragen werden, die jeweils spezielle Struktur- und Formatinformationen übertragen.

13. Vorrichtung nach Anspruch 12, dadurch gekennzeichnet, daß die parallelen Informationsströme sogenannte "debanalisierte" Ströme umfassen, welche Informationen übertragen, deren Struktur und Format vordefiniert und starr sind, und sogenannte "banalisierte" Ströme umfassen, welche Informationen übertragen, deren Struktur und Format offen und frei sind.

14. Vorrichtung nach Anspruch 13, dadurch gekennzeichnet, daß die Verarbeitungseinheit (UC$_i$) der Masterstation (SM) Mittel umfaßt, um die banalisierten und debanalisierten Informationsströme zu aktivieren, sei es in einer zufälligen Weise, wenn sich der Durchgang bedeutsamer zusätzlicher Informationen als notwendig erweist, sei es in zyklischer Weise bei jedem Automatenzyklus.

15. Vorrichtung nach Anspruch 14, dadurch gekennzeichnet, daß die von einer Station zu einer anderen Station über das Übertragungsmedium (MT) übertragene Informationsströme durch die Verarbeitungseinheit (UC$_i$) jeder Station (S$_i$) verwaltet werden, welche Mittel umfaßt, um bei jedem Automatenzyklus mit abnehmender Priorität zunächst den Fluß zu bearbeiten, der die debanalisierten Informationen überträgt, der die Schaltungskarten von Betätigungsgliedern jeder Station betrifft, anschließend den Strom zu bearbeiten, der banalisierte Informationen überträgt, welche sich auf die Schaltungskarten der Betätigungsglieder jeder Station bezieht, anschließend den Strom zu bearbeiten, der debanalisierte Informationen überträgt, die sich auf Schaltungskarten von Fühlern jeder Station bezieht, anschließend den Strom zu bearbeiten, der banalisierte Informationen überträgt, die sich auf Schaltungskarten der Fühler jeder Station beziehen, und schließlich den Strom zu bearbeiten, der andere banalisierte Informationen überträgt, die sich auf die Gesamtheit der Schaltungsplatinen jeder Station beziehen, wobei die Verarbeitungseinheit (UC$_i$) jeder Station als Antwort auf die Ströme, welche sie verwaltet, Informationen abgibt, die bereits vorbereitet und gespeichert sind.

16. Vorrichtung nach Anspruch 7, angewendet auf programmierbare Automaten gemäß den Ansprüchen 13 bis 15, dadurch gekennzeichnet, daß die Leitungs-Verarbeitungseinheit (UCL$_i$) jeder Slave-Station (SE$_i$) umfaßt: Mittel zum Speichern einer sie betreffenden Anfrage der Master-Station in dem Zwischenspeicher, Mittel zur Verarbeitung der Anfrage sei es in einem transparenten Modus, in dem die Leitungs-Verarbeitungseinheit (UCL$_i$) die Verarbeitungseinheit (UC$_i$) der Slave-Station (SE$_i$) nicht benachrichtigt, wobei die Bearbeitung der Anfrage später erfolgt, sei es in einem Teilmodus, bei welchem die Verarbeitungseinheit (UCL$_i$) die Verarbeitungseinheit (UC$_i$) der Slave-Station (SE$_i$) benachrichtigt, wobei die Bearbeitung der Anfrage und die Ausarbeitung einer neuen Antwort für die folgende Anfrage sofort erfolgt.

17. Vorrichtung nach Anspruch 16, dadurch gekennzeichnet, daß der Zwischenspeicher jeder Station Mittel umfaßt, um die Informationen entweder nur dann zu speichern, wenn die ihnen zugeordneten Speicher leer sind, oder in dauerhafter Weise, wobei dann gegebenenfalls die vorher gespeicherten Informationen gelöscht werden.

**Claims**

1. Process for the transmission of digital information between several stations across a transmission medium (MT) passing through stations (S$_i$), whereof each has an interface (I$_i$) with the said medium (MT), the interface being provided with a communication protocol controlling the transmission/reception on said medium (MT), characterized in combination by the fact that the said interfaces (I$_i$) are provided with a protocol of type CSMA/CD, according to which each interface (I$_i$) is able to transmit/receive on the said medium (MT) in an asynchronous manner, whilst permanently listening to the said medium (MT), the interface (I$_i$) only being able to start transmission of information in the absence of a signal on the medium (MT) and being compelled to interrupt its transmission if a collision appears, which manifests the start of simultaneous transmission by several interfaces (I$_i$), by the fact that at least one of the stations serves as the master (SM), the other being slaves (SE$_i$), by the fact that in the current mode, the interfaces of the slave station only have the right to transmit in response to an individual request from the master station (SM), which eliminates any collision risk, by the fact that at least some of the slave stations, called freed slave stations, have the right to transmit under their own initiative in an exceptional manner and by the fact that in the case of a collision, with such an exceptional transmission, said collision is solved by the CSMA/CD protocol.

2. Process according to claim 1, characterized in that the interface of the master station is prevented from transmitting during the solving of a collision.

3. Process according to claims 1 and 2, characterized in that the CSMA/CD protocol is made "determinist", i.e. is able to solve any collision in a predetermined time.

4. Apparatus for the transmission of digital information between several stations for performing the process according to any one of the preceding claims, characterized in that each interface (I$_i$) comprises a communication controller (GSC$_i$) having an information transmission line (LTB$_i$), an information reception line (LRB$_i$), both of which are connected to the transmission medium (MT) and a processing unit for the said lines (UCL$_l$) conveying transmission/reception information, said communication controller being able to validate the information transmission/reception on said medium (MT), as well as govern the authorization to transmit, an electronic device (DPRAM$_l$) equipped with a double access random-access memory forming a buffer store for the transmission/reception information, a processing unit (UC$_l$) able to control the information exchange between the station (S$_l$) and the buffer store (DPRAM$_l$) and means able to contain the CSMA/CD protocol, together with a data item customizing the station as slave or master.

5. Apparatus according to claim 4, characterized in that the said processing unit (UC$_l$) is incorporated into the communication controller (GSC$_l$).

6. Apparatus according to claim 4, characterized in that the said processing unit (UC$_l$) is a supplementary processing unit located between the buffer memory (DPRAM$_l$) and the station (S$_l$).

7. Apparatus according to any one of the claims 4 to 6, characterized, in combination, by the fact that the communication controller (GSC$_l$) of a slave interface comprises means for permanently listening to the transmission medium (MT) waiting for a request from the master station (SM) applying thereto and by the fact that when such a request is made, the communication controller comprises means for decoding it and then storing it in the buffer memory (DPRAM$_l$) and then seeks an already prepared response stored in said buffer memory (DPRAM$_l$), and finally means for notifying the station (S$_l$), which in turn comprises means for processing the thus decoded request and means for preparing a new response to a following request, said prepared response then being stored in the buffer store (DPRAM$_l$).

8. Apparatus according to one of the claims 4 to 7, characterized in that the communication controllers (GSC$_l$) of the freed slave stations incorporate means for transmitting in an exceptional manner and under their own initiative to the master station (SM) or slave station (SE), preset information supplied by the communication controllers (GSC$_l$) of said freed slave stations as a function of preset events intervening on said freed slave stations.

9. Apparatus according to claim 8, characterized in that the communication controllers of the freed slave stations incorporate a normal operating state in which the freed slave stations behave like simple slave stations and a special operating state when the freed slave stations are authorized to transmit under their own initiative to a master or slave station, the communication controllers of the freed slave stations passing from the normal state to the special state when they are accessed by the preset events intervening on their freed slave station and returning to their normal operating state at the end of the exceptional transmission.

10. Apparatus for the transfer of information between a central station of a programmable automaton and a plurality of peripheral stations associated with sensors and/or actuators of said automaton, according to any one of the claims 4 to 9, characterized in that the central station is the master station (SM) of the network, whilst the peripheral stations are the slave stations (SE$_l$) of the said network.

11. Apparatus according to claim 10, characterized in that at least one of the freed slave stations comprises means for accessing under its own initiative the master station with a view to obtaining the transfer of the right to make requests intended for slave stations, which enables the freed slave station to serve as a submaster.

12. Apparatus according to any one of the claims 4 to 11, characterized in that the digital transmission/reception information in each case incorporate a data item relative to their structure and their format and also data items relative to their significance, said information being transmitted via the transmission medium from one station to another in the form of parallel information flows, in each case conveying particular format and structure information.

13. Apparatus according to claim 12, characterized in that the parallel information flows incorporate so-called specialized flows conveying information, whose structure and format are preset and fixed and so-called non-specialized flows conveying information, whose structure and format are open and free.

14. Apparatus according to claim 13, characterized in that the processing unit (UC$_l$) of the master station (SM) comprises means for activating the specialized and non-specialized information flows either in a random manner when the passage of supplementary significant information proves necessary, or in a cyclic manner, during each automaton cycle.

15. Apparatus according to claim 14, characterized in that the information flows transmitted from one station to another via the transmission medium (MT) are controlled by the processing unit (UC$_l$) of each station (S$_l$), which comprises means for processing during each automaton cycle and by decreasing priority, firstly the flow conveying specialized information relative to the actuator circuit boards of each station, then the flow conveying non-specialized information relative to the actuator circuit boards of each station, then the flow conveying specialized information relative to the sensor circuit boards of each station, then the flow conveying non-specialized information relative to the sensor circuit boards of each station and finally the flow conveying other non-specialized informations relative to all the circuit boards of each station, said processing unit (UC$_l$) of each station supplying already prepared and stored information in response to the said flows which it controls.

16. Apparatus according to claim 7, applied to programmable automatons according to claims 13 to 15, characterized in that the line processing unit $(UCL_i)$ of each slave station $(SE_i)$ comprises means for storing in the buffer store the request from the master station relating thereto, means for processing either in accordance with a transparent mode in which the line processing unit $(UCL_i)$ does not notify the processing unit $(UC_i)$ of the slave station $(SE_i)$, processing of the request taking place subsequently, or according to an urgent mode in which the processing unit $(UCL_i)$ notifies the processing unit $(UC_i)$ of the slave station $(SE_i)$, the processing of the request and the preparation of the new response to the following request taking place immediately.

17. Apparatus according to claim 16, characterized in that the buffer store of each station comprises means for storing the information either only when the storage locations allocated thereto are empty, or in a permanent manner, thus possibly overlaying previously stored information.

$S_i$

$S_i$

| $SE_1$ | | $SE_2$ | | $SM$ | | $SE_i$ | | $SE_n$ |

MT

## FIG.1

$S_i$

$UC_i$

$I_i$

$DPRAM_i$

| $GSC_i$ | $UCL_i$ |

$LRB_i$

$LTB_i$

## FIG.2

14

## FIG.3

requête
maitre pour moi — 10

N

O

décodage et
stockage requête — 12

émission réponse
déjà préparée — 14

mode dialogue Maître-
esclave.
transparent/urgent. — 16

T

U

avertissement immédiat
de l'UC de traitement
de la station
(traitement immédiat) — 18

pas d'avertissement
à l'UC de traitement
de la station
(traitement ultérieur.) — 20

# FIG.4

N

demande d'émission exceptionnelle  50

O

changement de contexte : normal / spécial  52

émission maître particulière  54

retour contexte normal  60

collision  56

N

O

résolution  58

FIG.5

**FIG.6**

| N° | Nom de flux d'informations | Mode de dialogue Maître-esclave | |
|---|---|---|---|
| 0 | Synchronisation | Transparent | |
| | | | |
| 2 | Modes de marche | Urgent | Permanent |
| 3 | Configuration | Transparent | Permanent |
| 4 | Entrées TOR tabulées | Transparent | Permanent |
| 5 | Sorties TOR tabulées | Urgent | Permanent |
| 8 | Messages aléatoires Console,Paramètres,Requète1 | Urgent | Non Permanent |
| 9 | Messages aléatoires Requète 2 | Urgent | Non permanent |
| OC | Messages Cycliques | Transparent | Permanent |
| OD | Messages entrées | Transparent | Permanent |
| OE | Messages sorties | Urgent | Permanent |

## FI G.7